Europäisches Patentamt

European Patent Office

Office européen des brevets

(11) Numéro de publication: **0 034 973**

**A1**

## (12) DEMANDE DE BREVET EUROPEEN

(21) Numéro de dépôt: **81400228.3**

(22) Date de dépôt: **13.02.81**

(51) Int. Cl.³: **H 04 L 27/20**

(30) Priorité: **22.02.80 FR 8003976**

(43) Date de publication de la demande:
**02.09.81 Bulletin 81/35**

(84) Etats contractants désignés:
**AT BE CH DE GB IT LI LU NL SE**

(71) Demandeur: **THOMSON-CSF**
**173, Boulevard Haussmann**
**F-75360 Paris Cedex 08(FR)**

(72) Inventeur: **Curtinot, Jean-Claude**
**THOMSON-CSF SCPI 173, bld Haussmann**
**F-75360 Paris Cedex 08(FR)**

(74) Mandataire: **Turlèque, Clotilde et al,**
**"THOMSON-CSF" - SCPI 173, bld Haussmann**
**F-75360 Paris Cedex 08(FR)**

(54) **Dispositif de modulation numérique linéaire pour émetteur hertzien.**

(57) L'invention se rapporte à un dispositif de modulation pour la transmission de signaux numériques sur une porteuse modulée à au moins deux états de phase.

Elle a pour objet un dispositif de modulation comportant un oscillateur haute fréquence (1), un modulateur symétrique (20), linéaire, ayant une entrée de signal reliée à la sortie de l'oscillateur. L'entrée de modulation du modulateur reçoit les signaux numériques codés d'un dispositif de codage (30) par l'intermédaire d'un filtre passe-bas (40).

L'invention s'applique, notamment, aux dispositifs de modulation à quatre états de phase, le modulateur étant alors un modulateur double symétrique.

./...

Croydon Printing Company Ltd.

# FIG_2

OSCILLATEUR $10$ → MODULATEUR $20$ → PM(t)

MODULATEUR ← NF(t) — FILTRE PASSE-BAS $40$

FILTRE PASSE-BAS ← NC(t) — DISPOSITIF DE CODAGE $30$

DISPOSITIF DE CODAGE ← N(t)

1

## DISPOSITIF DE MODULATION NUMERIQUE LINEAIRE
## POUR EMETTEUR HERTZIEN

L'invention se rapporte aux systèmes de télécommunications transmettant des informations numériques et a plus particulièrement pour objet un dispositif de modulation numérique "linéaire" (comportant un modulateur linéaire pour le signal de modulation) et un émetteur hertzien comportant un tel dispositif.

Pour la transmission radioélectrique des informations numériques, le train numérique peut être transmis en bande de base ou en modulant une onde sinusoïdale porteuse. Dans ce dernier cas, plusieurs types de modulation sont possibles, mais le plus utilisé pour la transmission radioélectrique est une modulation par déplacement de phase qui se révèle être plus résistante au bruit et de mise en œuvre plus facile que les autres types de modulation à états discrets.

Dans les émetteurs hertziens à modulation numérique conçus jusqu'à présent, la modulation est effectuée par un modulateur saturé soit sur une porteuse intermédiaire, la porteuse modulée étant ensuite transposée en SHF (ondes centimétriques), soit directement en SHF. Dans le premier cas, en plus du mélangeur d'émission, nécessaire à la transposition en SHF et de l'oscillateur local correspondant, un filtre passe-bande doit être prévu après le modulateur de façon à limiter la bande à transmettre. Ce filtre à fréquence intermédiaire est coûteux et quelquefois difficile à réaliser, mais il a l'avantage d'être le même pour tous les émetteurs, quelle que soit la fréquence d'émission du canal utilisé.

Dans le second cas, lorsque la modulation est effectuée directement sur la porteuse SHF, le nombre de circuits nécessaires est plus faible (plus de mélangeur d'émission et un seul oscillateur local), mais comme dans le premier cas un filtre passe-bande doit être prévu après le modulateur pour limiter la bande à transmettre. De plus, dans ce cas, le filtre doit être calculé ou réglé pour chaque fréquence d'émission. Enfin le filtre SHF, qui doit être à bande étroite est coûteux et doit être compensé en température.

La revue "Microwave Journal", vol.21, n°1, janvier 1978 a décrit, dans un article intitulé "PSK sidebands reduced by premodulation filtering", un dispositif de modulation numérique dans lequel la modulation numérique est effectuée directement en UHF. Dans la structure décrite un circuit de linéarisation à résistance et diodes est associé à un mélangeur double symétrique pour réaliser un ensemble linéaire. De plus, l'isolation de porteuse réalisée par ce type de mélangeurs pour une bande de fréquences assez large, ne dépasse généralement pas 25 à 30 dBm.

L'invention propose un dispositif de modulation de ce type mais plus particulièrement adapté aux émetteurs hertziens, pour des gammes de fréquences d'utilisation supérieures au gigahertz et des débits numériques pouvant varier largement, par exemple entre 2 et 34 Mbits. A cet effet le modulateur utilisé est linéaire en ce qui concerne les signaux modulants et permet de plus, de réaliser une bonne isolation de la porteuse, de l'ordre de 45 dBm, en particulier en réduisant le nombre de diodes utilisées.

Suivant l'invention, un dispositif de modulation numérique pour émetteur hertzien comportant : un oscillateur local ayant une sortie de signal d'oscillation locale; un modulateur ayant une entrée de signal d'oscillation locale connectée à la sortie de l'oscillateur, au moins une entrée de modulation, et une sortie de signal modulé; et un dispositif de codage ayant une entrée de signal numérique et au moins une sortie de signal numérique codé, relié à l'entrée de modulation du modulateur par un circuit filtre passe-bas, est caractérisé en ce que le modulateur, linéaire pour le signal de modulation, est constitué d'au moins un mélangeur symétrique à deux diodes.

L'invention sera mieux comprise et d'autres caractéristiques apparaîtront à l'aide de la description qui suit en référence aux figures annexées.

La figure 1 représente un schéma synoptique des dispositifs de modulation numérique connus ;

La figure 2 représente un schéma synoptique d'un dispositif de modulation selon l'invention ;

La figure 3 est un diagramme des signaux en différents points de ce dispositif de modulation et les spectres de fréquences associées ;

La figure 4 est un schéma d'un modulateur selon l'invention pour une modulation à quatre états de phase ;

La figure 5 est un schéma d'un mode de réalisation, en technique intégrée microélectronique, d'une partie du dispositif de modulation selon l'invention ;

La figure 6 représente en coupe le substrat 100 de la figure 5 au niveau d'une transition ligne à ruban-ligne à fente.

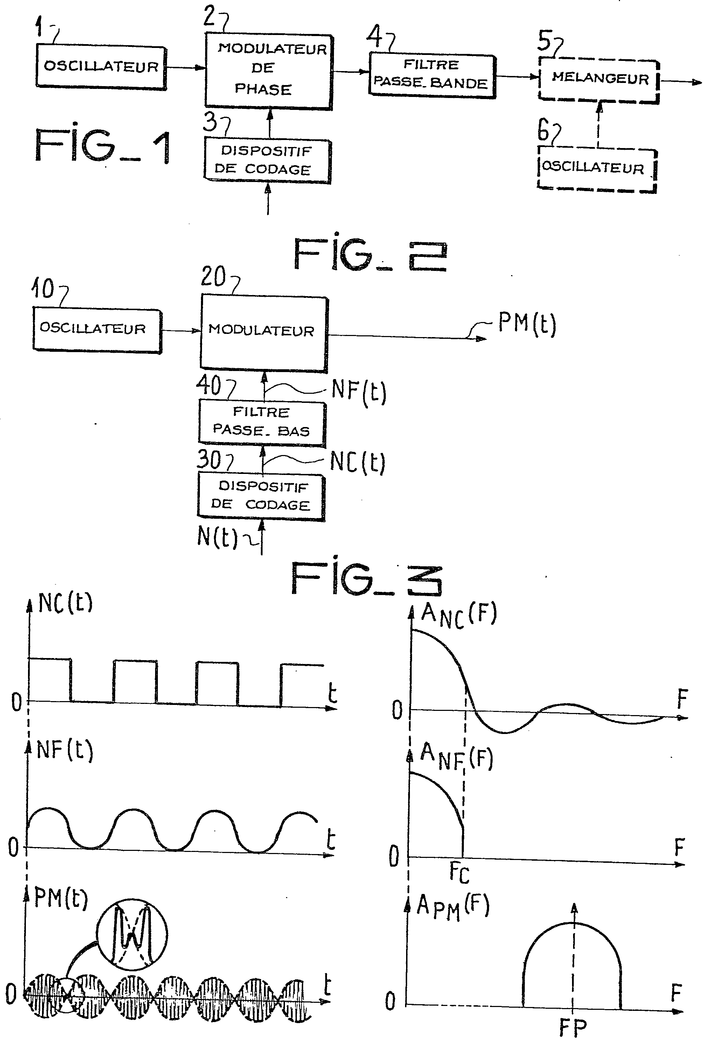

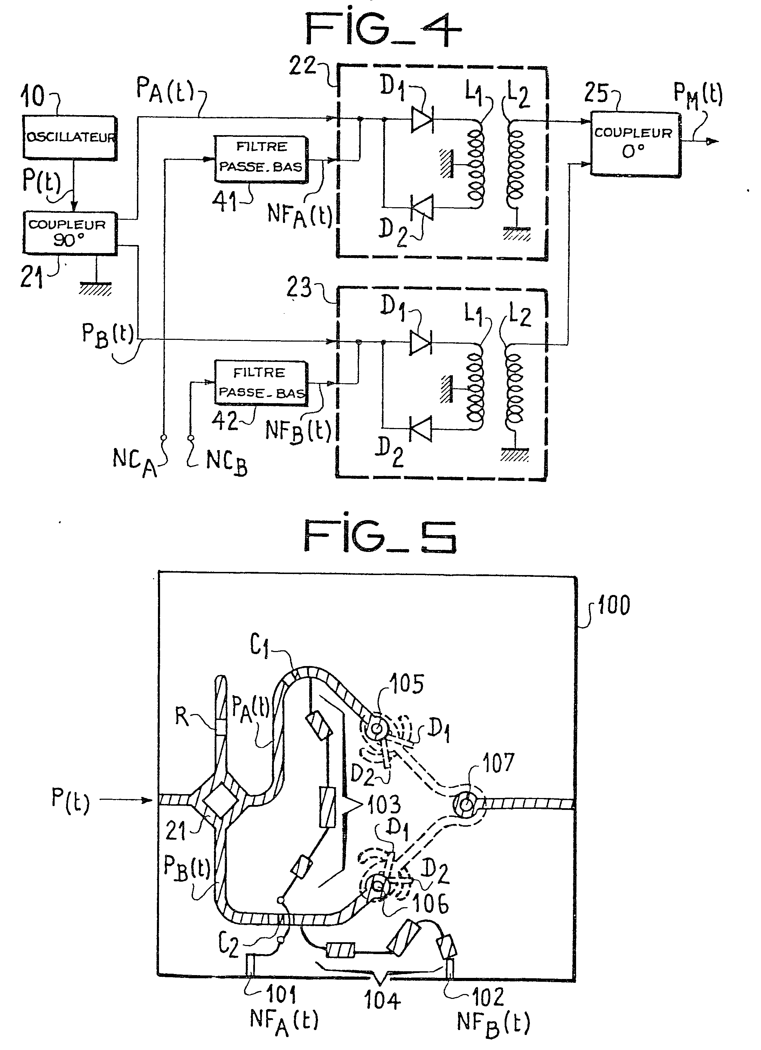

La figure 1 représente schématiquement les dispositifs de modulation numérique utilisés actuellement dans les émetteurs hertziens.

Ils comportent principalement un oscillateur 1 à la fréquence de la porteuse à moduler, c'est-à-dire à FI ou à SHF, alimentant un modulateur de phase 2, saturé par le signal de modulation ; le signal de modulation appliqué au modulateur saturé est le signal numérique codé par le dispositif de codage 3.

La porteuse modulée est ensuite filtrée dans un filtre passe-bande 4. Dans le cas où la modulation est effectuée sur une porteuse SHF, le signal à transmettre est le signal de sortie du filtre 4. Lorsque la modulation est effectuée sur une porteuse à fréquence intermédiaire, la transposition est obtenue au moyen d'un mélangeur 5 recevant également un signal d'oscillation locale SHF d'un oscillateur 6. Le mélangeur 5 et l'oscillateur 6 ont été représentés en pointillés sur la figure 1.

Le modulateur saturé, 2, qui, pour une modulation à quatre états de phase, utilise toujours des diodes successivement bloquées et saturées par le signal modulant, peut avoir différentes structures. Ce peut être un modulateur à différence de chemins utilisant des circulateurs ou des anneaux hybrides, ou un modulateur de type parallèle.

Les modulateurs à différence de chemins sont avantageux en ce qui concerne les pertes qui sont faibles, mais ont l'inconvénient d'être très sélectifs du fait que les différences de chemins sont des fractions de longueur d'onde de la porteuse et que l'erreur de phase peut être importante dès que l'on travaille à des fréquences qui ne sont plus très hautes. Cette erreur peut atteindre par exemple $\pm$ 10° à 2 GHz pour un écart de 250 MHz par rapport à la fréquence pour laquelle a été calculée la différence du chemin.

Le second type de structure possible est la structure dite parallèle dans laquelle la porteuse est séparée en deux composantes en quadrature appliquées à deux voies en parallèle dans lesquelles chaque composante subit ou non un déphasage supplémentaire en fonction de l'état de deux trains numériques modulants appliqués dans chaque voie, les deux composantes étant ensuite recombinées dans un coupleur 0°. Un tel type de modulateur, utilisant par exemple des modulateurs en anneaux introduit des pertes intrinsèques auxquelles doivent être ajoutées les pertes des lignes mais n'a pas l'inconvénient de la sélectivité.

La figure 2 représente le schéma synoptique du dispositif de modulation selon l'invention.

Le dispositif comporte un oscillateur 10 à la fréquence de la porteuse à moduler, c'est-à-dire à la fréquence SHF, et un dispositif de codage 30. Le modulateur 20 est un mélangeur symétrique linéaire pour le signal modulant, ce signal modulant étant le signal de sortie du dispositif de codage 30 filtré dans un filtre passe-bas 40. Le signal de sortie du mélangeur symétrique 20 est la porteuse modulée SHF limitée en bande, la bande du signal de sortie du filtre passe-bas 40 ayant été transposée en SHF par le mélangeur symétrique tout en gardant la modulation. Il est indispensable dans ce dispositif de modulation que le mélangeur ne soit pas saturé par le signal modulant.

En effet, dans le cas contraire, le spectre du signal modulé serait à nouveau étendu et un filtrage passe-bande redeviendrait nécessaire à la sortie du modulateur avant les circuits d'émission.

En conséquence, pour que le spectre ne soit pas perturbé, le modulateur doit rester linéaire pour le signal modulant et doit donc fonctionner avec des signaux numériques d'amplitude faible.

La figure 3 représente les signaux en différents points du dispositif de modulation et les spectres de fréquences correspondants.

Le signal NC(t) est le signal numérique N(t), codé à deux niveaux. L'enveloppe des amplitudes des raies du spectre correspondant $A_{NC}(F)$, F étant la fréquence, varie suivant une courbe en $\frac{\sin x}{x}$ .

Le signal NF(t) est le signal numérique filtré issu du filtre passe-bas 40. L'enveloppe du spectre correspondant $A_{NF}(F)$ est la même que celle du signal NC(t) pour les fréquences inférieures à la fréquence de coupure du filtre $F_C$.

Le signal PM(t) est la porteuse SHF modulée par le signal NF(t), le spectre $A_{PM}(F)$ étant le spectre de NF(t) transposé autour de la fréquence porteuse SHF, FP.

Une analyse fine de ce signal PM(t) permet de montrer qu'une modulation de phase apparaît sur la porteuse modulée pour les transitions du signal numérique codé.

La figure 4 est un schéma d'un mode de réalisation du dispositif de modulation suivant l'invention pour une modulation de phase à 4 états. Le modulateur est du type mélangeur double symétrique, linéaire pour le signal modulant et a une structure du type parallèle. Il est réalisé avec des éléments discrets.

Pour une modulation à 4 états de phase, le dispositif de codage 3 fournit à partir de la suite de symboles 0,1 à transmettre, deux trains numériques A et B contenant respectivement les symboles de rang pair et les symboles de rang impair, ces deux trains modulant en phase deux ondes porteuses en quadrature, qui sont ensuite recombinées pour l'obtention de la porteuse modulée.

Le modulateur comporte donc un coupleur 3dB à déphasage de $\frac{\pi}{2}$, 21, recevant le signal P(t) à la fréquence porteuse de l'oscillateur local 10. Ce coupleur 21 partage la puissance qu'il reçoit par parties égales $P_A(t)$ et $P_B(t)$ entre deux voies tout en déphasant de 90° une composante par rapport à l'autre. Ces signaux sont respectivement appliqués à une première entrée de deux mélangeurs symétriques, 22 et 23, dont les deuxièmes entrées reçoivent respectivement les trains numériques $NF_A$ et $NF_B$ après filtrage par les filtres passe-bas respectivement 41 et 42. Ces mélangeurs comportent chacun deux chemins parallèles comportant chacun une diode, respectivement $D_1$ et $D_2$, par ailleurs reliées aux bornes d'une bobine d'inductance $L_1$ dont le point milieu est relié à la masse. Les diodes $D_1$ et $D_2$ sont montées tête bêche. Une seconde bobine $L_2$ recueille le signal résultant du mélange du signal à fréquence porteuse FP(t) et du signal numérique filtré, $NF_A(t)$ ou $NF_B(t)$ selon le chemin. Ces deux signaux sont ensuite recombinés dans un coupleur 0°, 25, qui n'introduit pas de déphasage entre les deux voies.

Cette structure est exactement semblable à celle d'un mélangeur double symétrique à réjection de la fréquence image, tel que ceux qui peuvent être utilisés dans les récepteurs des faisceaux hertziens : la sortie signal SHF modulé est alors l'entrée de signal reçu, SHF modulé ; l'accès oscillateur local SHF est alors l'accès oscillateur local FI ; et l'entrée signal numérique filtré est alors la sortie signal modulé à fréquence intermédiaire, un filtre passe-bas coupant les fréquences SHF étant prévu sur chacun des bras de sortie correspondant (déphasés de 90°). Un tel mélangeur assure une très bonne isolation de la porteuse dans une bande de fréquences assez large. Les mesures réalisées ont montré, par exemple, qu'une isolation de 46 dBm était obtenue dans une bande de 400 MHz autour d'une fréquence centrale de 2 GHz.

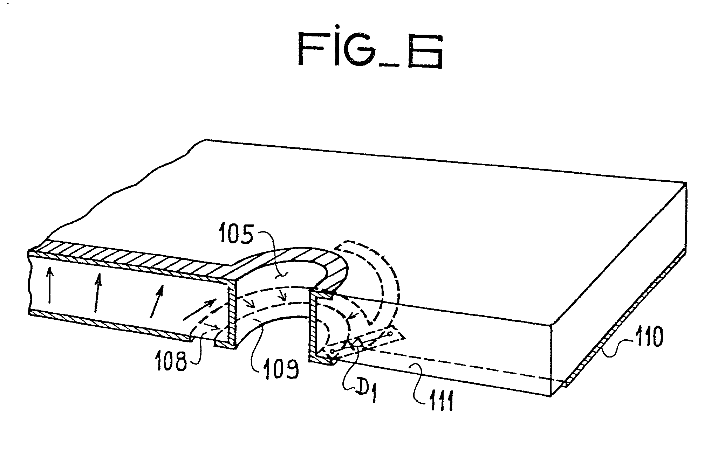

La figure 5 représente en plan un mode de réalisation en microélectronique intégrée d'une partie du dispositif de modulation suivant l'invention, la technologie intégrée utilisée étant celle des guides d'onde à rubans (microstrip), des lignes à fentes, et des lignes coplanaires.

La figure 6 représente une vue en coupe d'une partie du circuit intégré de la figure 5. Les mêmes éléments ont été désignés par les mêmes repères sur ces deux figures.

Le substrat 100 est constitué d'un matériau ayant une permittivité élevée du type titanate de magnésium ou alumine. Le guidage des ondes est obtenu dans ce substrat par des guides à rubans réalisés,sur une face du substrat (recto) par métallisation d'un ruban, l'autre face (verso) qui constitue le plan de masse étant quasi-entièrement métallisée, le champ électrique étant alors dirigé suivant l'épaisseur du substrat.

Le guidage des ondes peut également être obtenu par des lignes à fente lorsque les impédances à réaliser sont très élevées, car la largeur des guides à ruban correspondants serait très faible et difficile à réaliser. La transition entre un guide à ruban et une ou deux lignes à fente est obtenue par l'intermédiaire d'un trou métallisé. De plus, les capacités de découplage et les diodes utilisées sont de préférence des composants plats dits "beam lead" monolithiques, utilisables directement sans apport d'autres éléments tels que connections et boîtiers, et faciles à mettre en série entre deux lignes coplanaires, à rubans ou à fentes. La structure ainsi réalisée est représentée en plan sur la figure 5 où les éléments intégrés au recto ont été représentés en traits pleins, les éléments présents au recto ainsi que les zones démétallisées correspondant aux lignes à fente ayant été représentés en traits pointillés.

A titre d'exemple, le coupleur 3dB, 21, a été réalisé en guide à ruban, la porteuse incidente $P(t)$ étant divisée en deux composantes en quadrature $P_A(t)$ et $P_B(t)$. Le quatrième bras du coupleur est fermé par une charge $R = 50\Omega$. Des capacités "beam lead" $C_1$ et $C_2$ sont disposées sur les guides à ruban de sortie du coupleur 21. Ces capacités permettent de découpler l'oscillateur local des signaux à basse fréquence que sont les signaux numériques filtrés $NF_A(t)$ et $NF_B(t)$. Ces signaux sont appliqués aux bornes de connection 101 et 102 prévues sur le substrat et sont transmis aux lignes à rubans par l'intermédiaire de filtres passe-bas à 6 éléments microrubans, respectivement 103 et 104, isolant les circuits de traitement numérique des hautes fréquences SHF. Des trous métallisés traversant le substrat, 105 et 106 permettent la transition entre les lignes à ruban et les doubles lignes à fente.

La figure 6 qui montre en coupe le substrat au niveau du trou 105, suivant la direction de propagation dans la ligne à ruban, permet de mieux comprendre le mode de couplage. Ce couplage par trou métallisé entouré, au verso du substrat, d'une double ligne à fente circulaire 108 permet de diviser l'onde incidente en deux composantes, des diodes plates $D_1$ et $D_2$ étant appliquées entre l'anneau central métallisé, 109, et le plan de masse 110, en travers des lignes à fentes et tête-bêche. Le signal émergeant est transmis dans la ligne à fente de sortie, 111, qui permet de recombiner les deux parties de l'onde résultant du mélange $P_A(t)$ et $NF_A$. Le second bras du mélangeur double est exactement semblable au premier et les deux ondes porteuses modulées par les signaux numériques filtrés $NF_A(t)$ et $NF_B(t)$ sont recombinées dans un coupleur 0° réalisé suivant la même technique, un trou métallisé 107 permettant le couplage des ondes transmises par les lignes à fente des deux bras de sortie de chaque mélangeur symétrique à une ligne à ruban de sortie formant la sortie du mélangeur double symétrique.

L'invention n'est pas limitée aux circuits précisément décrits et, pour une modulation de phase à deux états, un dispositif de modulation qui comporte un mélangeur symétrique simple à deux diodes, comportant une entrée de signal et une entrée d'oscillation locale, et un filtre passe-bas filtrant le signal de modulation avant de le mélanger au signal d'oscillation locale dans le mélangeur symétrique est du domaine de l'invention. Par ailleurs, le déphasage entre les deux composantes de la porteuse, nécessaire pour une modulation à 4 états, peut être également introduit après la modulation avant recombinaison dans le second coupleur.

## REVENDICATIONS

1. Dispositif de modulation numérique pour émetteur hertzien comportant : un oscillateur local (10) ayant une sortie de signal d'oscillation locale ; un modulateur (20) ayant une entrée de signal d'oscillation locale connectée à la sortie de l'oscillateur, au moins une entrée de modulation, et une sortie de signal modulé ; et un dispositif de codage (30) ayant une entrée de signal numérique et au moins une sortie de signal numérique codé, reliée à l'entrée de modulation du modulateur par un circuit filtre passe-bas (40), caractérisé en ce que le modulateur, linéaire pour le signal de modulation, est constitué d'au moins un mélangeur symétrique à deux diodes.

2. Dispositif selon la revendication 1, caractérisé en ce que, pour une modulation de phase à deux états, le dispositif de codage a une seule sortie et le dispositif de modulation a une entrée correspondante, le modulateur étant un mélangeur symétrique simple.

3. Dispositif selon la revendication 1, caractérisé en ce que, pour une modulation de phase à quatre états, le dispositif de codage a deux sorties fournissant deux trains numériques, et le dispositif de modulation a deux entrées de modulation correspondantes, le modulateur étant un mélangeur double symétrique comportant deux voies ayant chacune un mélangeur symétrique à deux diodes (22, 23), et comportant un séparateur sur l'entrée de signal d'oscillation locale et un coupleur de sortie de signal modulé, un déphaseur $\frac{\pi}{2}$ étant prévu sur l'une des deux voies du mélangeur double, un circuit filtre passe-bas (41, 42) étant disposé entre chaque sortie du dispositif de codage et l'entrée de modulation correspondante du modulateur.

4. Dispositif selon la revendication 3, caractérisé en ce que le déphaseur $\frac{\pi}{2}$ et le coupleur d'entrée sont réunis en un coupleur à $\frac{\pi}{2}$.

5. Dispositif selon la revendication 1, caractérisé en ce que le modulateur est réalisé en technique intégrée microélectronique.

FIG_1

1 OSCILLATEUR → 2 MODULATEUR DE PHASE → 4 FILTRE PASSE-BANDE → 5 MELANGEUR →

3 DISPOSITIF DE CODAGE

6 OSCILLATEUR

FIG_2

10 OSCILLATEUR → 20 MODULATEUR → PM(t)

40 FILTRE PASSE-BAS ← NF(t)

30 DISPOSITIF DE CODAGE ← NC(t)

N(t)

FIG_3

NC(t)

NF(t)

PM(t)

$A_{NC}(F)$

$A_{NF}(F)$ — $F_C$

$A_{PM}(F)$ — FP

# FIG_4

OSCILLATEUR 10

$P(t)$

COUPLEUR 90° 21

$P_A(t)$

FILTRE PASSE.BAS 41 $NF_A(t)$

22 $D_1$ $L_1$ $L_2$ $D_2$

25 COUPLEUR 0° $P_M(t)$

$P_B(t)$

FILTRE PASSE-BAS 42 $NF_B(t)$

23 $D_1$ $L_1$ $L_2$ $D_2$

$NC_A$ $NC_B$

# FIG_5

100

$C_1$

$R$ $P_A(t)$

$P(t)$

21

$P_B(t)$

105 $D_1$ $D_2$

103

$D_1$ $D_2$

107

106

$C_2$

101 $NF_A(t)$ 104 102 $NF_B(t)$

FIG_6

105

108

109

D1

111

110

**0034973**

Office européen
des brevets

**RAPPORT DE RECHERCHE EUROPEENNE**

Numéro de la demande

EP 81 40 0228

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| D | MICROWAVE JOURNAL, vol. 21, no. 1, janvier 1978 DEDHAM, US ANDREN: "PSK Sidebands reduced by premodulation filtering", pages 69-73 <br><br> * Page 69, lignes 25-28; page 70, lignes 19-29, 38-42; page 73, colonne de droite, dernier alinéa * <br><br> -- | 1-4 | H 04 L 27/20 |
| | US - A - 3 002 159 (WIANCKO) <br><br> * Colonne 5, lignes 15-43 * <br><br> -- | 1 | **DOMAINES TECHNIQUES RECHERCHES (Int. Cl.³)** <br><br> H 04 L 27/20 <br> 27/18 <br> H 03 C 3/40 |
| A | MARCONI REVIEW, vol. 41, no. 210, 1978 Essex, GB BAKER et al.: "A linear 4-level PSK modulator of a new configuration", pages 129-135 <br><br> * Page 130, lignes 1-6; page 131, lignes 16-18; page 132, dernier alinéa - page 133, ligne 4 * <br><br> -- | 1,3 | |
| | 1979 IEEE INTERNATIONAL SOLID-STATE CIRCUITS CONFERENCE, DIGEST OF TECHNICAL PAPERS, février 1979 New York, US AIKAWA et al.: "2Gb Double-Balanced PSK Modulator using Coplanar Waveguides", pages 172-173 <br><br> * Page 172, colonne de gauche, lignes 10-19 * <br><br> -- | 5 | **CATEGORIE DES DOCUMENTS CITES** <br><br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons |
| | ./. | | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 29-05-1981 | HOLPER |

OEB Form 1503.1  06.78

**Office européen des brevets**

## RAPPORT DE RECHERCHE EUROPEENNE

EP 81 40 0228

| Catégorie | DOCUMENTS CONSIDERES COMME PERTINENTS | | CLASSEMENT DE LA DEMANDE (Int. Cl. ³) |
|---|---|---|---|
| | Citation du document avec indication, en cas de besoin, des parties pertinentes | Revendica-tion concernée | |
| P | US - A - 4 216 542 (HERMESMEYER) <br> * Colonne 3, lignes 12-30 * <br><br> ---- | 1 | |
| | | | **DOMAINES TECHNIQUES RECHERCHES (Int. Cl. ³)** |

OEB Form 1503.2   06.78